# EUROPÄISCHE PATENTSCHRIFT

(11) **EP 0 616 920 B1**
(45) Veröffentlichungstag und Bekanntmachung des Hinweises auf die Patenterteilung: **13.05.1998**
(21) Anmeldenummer: 94103010.8
(22) Anmeldetag: 01.03.1994
(51) Int. Cl.: B60N 3/02

(54) **Befestigungselement für an Karosserieteilen von Kraftfahrzeugen zu befestigende Ausstattungsteile**
Fastening device for outfit pieces, which are to be fitted to body parts of automotive vehicles
Dispositif de fixation pour pièces d'équipement, qui sont à fixer à des éléments de carrosserie d'automobiles

(30) Priorität: 20.03.1993 DE 4309024
(43) Veröffentlichungstag der Anmeldung: 28.09.1994
(73) Patentinhaber: BECKER GROUP EUROPE GmbH, 42285 Wuppertal (DE)
(72) Erfinder: Vilquin, Philippe, F-70300 Luxeuil les Bains (FR)

(56) Entgegenhaltungen:
- EP-A- 0 346 156
- DE-A- 3 021 552
- DE-A- 3 150 530
- FR-A- 2 428 540
- GB-A- 2 055 421
- US-A- 4 342 136

## Beschreibung

Die Erfindung betrifft ein Befestigungselement, insbesondere für an Karosserieteilen von Kraftfahrzeugen zu befestigende Ausstattungsteile wie Armlehnen, Haltegriffe, Sonnenblenden, Rückspiegel und dergleichen nach dem Oberbegriff des Anspruchs 1.

Diese Ausstattungsteile werden üblicherweise z. B. an einer Karosseriewand angeschraubt. Dabei müssen die Teile, um die Schraublöcher zu finden, sehr sorgfältig positioniert werden, was als langwierig und lästig empfunden wird. Von besonderem Nachteil bei der herkömmlichen Befestigungsart ist aber der durch die erforderliche Schraubarbeit bedingte beträchtliche Montageaufwand, mit den daraus resultierenden Kosten. Dies ist besonders nachteilig, wenn die Ausstattungsteile wie Haltegriffe, Sonnenblenden, Rückspiegel und dergleichen mit einem modularen Dachhimmelsystem verbunden werden sollen, um auf diese Weise eine schnelle und einfach durchzuführende Montage zu gewährleisten.

In der deutschen Offenlegungsschrift DE-A-3021 552 ist zwar eine Befestigungsvorrichtung für Haltegriffe, Armlehnen oder dergleichen beschrieben, bei der die Befestigung dieser Teile zumindest an zwei Stellen erfolgt und bei der ein in eine Aufnahme einsteckbarer Steckzapfen und ein etwa senkrecht zu diesem ausgerichteter Rastzapfen in eine eine Auszugssicherung aufweisende Aufnahme einsteckbar ist. Dabei besteht die Auszugssicherung aus den Rastzapfen radial kontaktierenden Federschenkeln, die in Einsteckrichtung des Rastzapfens konvergieren. Zwar lassen sich mit dieser Befestigungsvorrichtung Haltegriffe oder Armlehnen an Karosserieteilen ohne Verwendung von Schrauben befestigen, jedoch weist diese Befestigungsvorrichtung den Nachteil auf, daß grundsätzlich ein Steckzapfen und ein dazu beabstandeter Rastzapfen erforderlich sind und daß sich die Haltegriffe oder Armlehnen nur sehr schwierig wieder demontieren lassen.

In der GB-A-2 055 421 ist ein Befestigungselement für an Karosserieteilen von Kraftfahrzeugen zu befestigende Ausstattungsteile nach dem Oberbegriff des Anspruchs 1 beschrieben, bei dem eine Demontagemöglichkeit an sich vorgesehen ist. Beim Demontieren tritt jedoch eine bleibende Veränderung des Halteteils ein, da das Verriegelungselement mit einem Hammer in eine Öffnung des Halteteils eingeschlagen wird, um Rastvorsprünge hinter dem Karosserieteil zu verriegeln. Dieses Verriegelungselement ist als Vierkant ausgebildet, weist jedoch an seinen Kanten Gewindeelemente auf, die sich beim Herausschrauben in den jeweils paarweise parallelen Wänden einschneiden. Dies bedeutet, daß die Öffnung nach dem Herausschrauben nicht mehr quadratisch, sondern kreisförmig ist und sich das Verriegelungselement nunmehr in der Öffnung locker bewegen kann, wenn die Abflachungen den Flächen benachbart liegen. Dadurch ist ein wiederholtes Montieren und Demontieren mit dem Befestigungsteil gemäß der GB-A-2 055 421 mit erheblichen Unsicherheiten behaftet, da nach dem ersten Herausschrauben des Verriegelungselements ein Sperren des Befestigungsteils nur möglich ist, wenn die Gewindebereiche den Flächen gegenüberliegen, d. h. daß die Drehung des Verriegelungselements genau in dieser Stellung enden muß.

Bei dem Befestigungsteil gemäß der FR-A-2 428 540 ist ein eine Karosserieöffnung hintergreifendes Halteteil vorgesehen, in dessen Öffnung ein Keil eingeschlagen wird, um Schenkel mit Vorsprüngen zu spreizen und auf diese Weise in einer Karosserieöffnung zu sperren. Da die Verriegelung durch den stramm sitzenden Keil erfolgt, ist bereits mit dem Einschlagen des Keils eine bleibende Verformung verbunden, insbesondere dann, wenn das Befestigungsteil aufgrund der Fertigungstoleranzen sehr stramm in einer Karosserieöffnung sitzt. Dementsprechend ist die Demontage des Keils schwierig, wenn nicht unmöglich, wenn man auch noch in Betracht zieht, daß dieser Keil durch Vorsprünge in seiner eingeschlagenen Stellung gehalten wird.

Der Erfindung liegt die Aufgabe zugrunde, ein Befestigungselement zu schaffen, das sich bei vergleichsweise einfacher und kostengünstiger Herstellbarkeit schnell und einfach montieren läßt, die Ausstattungsteile im montierten Zustand absolut zuverlässig hält und sich auf einfache Weise wieder demontieren läßt.

Ausgehend von dieser Aufgabenstellung wird bei einem Befestigungselement der eingangs erwähnten Art gemäß Anspruch 1 vorgeschlagen, daß der Halteteil aus wenigstens einem an Trägern des Flanschteils gelagerten Winkelhebel besteht, der sich mittels des Verriegelungselements aus einer das Einführen in die Karosserieöffnung zulassenden Stellung in eine die Karosserieöffnung hintergreifende Stellung schwenken läßt.

Ein Ausstattungsteil läßt sich mittels des erfindungsgemäßen Befestigungselements somit an einem Karosserieteil einfach dadurch befestigen, daß der Halteteil in die Karosserieöffnung eingeführt wird, bis der Flanschteil an dem Karosserieteil anliegt und der Halteteil das Karosserieteil hintergreift. Um zu verhindern, daß sich der Halteteil aus der die Karosserieöffnung hintergreifenden Lage in die Einführlage bewegt, wird anschließend das Verriegelungselement in die Karosserieöffnung eingeführt und sperrt den Halteteil gegen eine Verschiebung.

Vorzugsweise können zwei gegenüberliegende Winkelhebel mit unter einem Winkel von 90° angeordneten Schenkeln mittels Lagerzapfen an Trägern des Flanschteils gelagert sein und in der Stellung zum Einführen in die Karosserieöffnung trennbar miteinander verbunden sein.

Auf diese Weise bleiben die Winkelhebel solange in der das Einführen in die Karosserieöffnung ermöglichenden Stellung und werden erst nach dem Einführen in die Karosserieöffnung getrennt und um 90° geschwenkt. Zu diesem Zweck können die Winkelhebel einstückig aus Kunststoff hergestellt und mittels eines Filmscharniers miteinander verbunden sein.

Das Trennen des Filmscharniers erfolgt durch das Verriegelungselement, das aus einem durch eine Öffnung in dem Flanschteil hindurch in die Karosserieöffnung zwischen den Winkelhebeln einführbaren Zapfen bestehen kann, den Flanschteil mittels Rastnasen hintergreift und einen Deckel für die Öffnung im Flanschteil bildet.

Zum Lösen des Befestigungsteils wird das Verriegelungselement aus der Öffnung im Flanschteil herausgezogen, so daß sich die Winkelhebel wieder frei bewegen können und sich der Flanschteil aus der Karosserieöffnung herausziehen läßt.

Gemäß einer anderen Ausführungsform (wie im unabhängigen Anspruch 5 angegeben) besteht der Halteteil aus einer durch eine Öffnung in dem Flanschteil hindurch in die Karosserieöffnung einführbaren, mit Rastvorsprüngen die Karosserieöffnung hintergreifenden, sich mit quer abstehenden Schenkeln an der Öffnung in dem Flanschteil abstützenden Feder, die U-förmig gebogen ist, so daß sich das Verriegelungselement zwischen die Schenkel der U-förmig gebogenen Feder einsetzen läßt, wobei die Schenkel der U-förmigen Feder über die quer abstehenden Schenkel hinausragende Lappen aufweisen, um die U-förmig gebogene Feder demontieren zu können, und das Verriegelungselement aus einem zwischen die Schenkel der U-förmigen Feder einklemmbaren Zapfen mit einem die Öffnung im Flanschteil verschließenden Deckel besteht.

Die Lappen der Schenkel der U-förmigen Feder lassen sich mittels einer Zange zusammendrücken, so daß die Rastvorsprünge die Karosserieöffnung nicht mehr hintergreifen und sich die U-förmige Feder aus der Karosserieöffnung und der Öffnung im Flanschteil herausziehen läßt.

Vorzugsweise kann die Feder aus Metall hergestellt sein und aus den Schenkeln und/oder den quer abstehenden Schenkeln ausgestanzte und abgebogene Rastvorsprünge und/oder Lappen aufweisen.

Vorzugsweise können der Flanschteil mit dem Verriegelungselement einstückig aus Kunststoff hergestellt und mit dem Deckel am Verriegelungselement über ein Filmscharnier verbunden sein.

Bei einer weiteren Ausführungsform des Befestigungsteils (wie im unabhängigen Anspruch 8 angegeben) ist der die Karosserieöffnung hintergreifende Halteteil als mit dem Flanschteil einstückig hergestellter Haken ausgebildet und das Verriegelungselement liegt an einer Seite der Karosserieöffnung bei einseitiger Anlage des Hakens an der gegenüberliegende Seite der Karosserieöffnung an. Zur Montage des Befestigungsteils braucht lediglich der Haken bis zur Anlage an einer Seite der Karosserieöffnung eingehängt zu werden, wonach das Verriegelungselement die Verschiebung in Löserichtung verhindert. Dies läßt sich auf einfache Weise mit einem quer in eine Öffnung im Flanschteil ragenden, elastischen Rasthaken erreichen, der sich beim Einhängen des Hakens in die Karosserieöffnung elastisch verformt und nachdem der Haken vollständig eingeführt ist, hinter die gegenüberliegende Seite der Karosserieöffnung springt.

Vorteilhafterweise können der Flanschteil, der Haken, der Rasthaken und ein die Öffnung im Flanschteil verschließender Deckel einstückig aus Kunststoff hergestellt sein, wobei der Deckel mit dem Flanschteil über ein Filmscharnier verbunden sein kann.

Die Erfindung wird nachstehend anhand mehrerer, in der Zeichnung dargestellter Ausführungsbeispiele des näheren erläutert. In der Zeichnung zeigen:
- Fig. 1: eine perspektivische, auseinandergezogene Darstellung des Befestigungselements gemäß einer ersten Ausführungsform,
- Fig. 2: eine Seitenansicht des Befestigungselements gemäß Fig. 1,
- Fig. 3: eine Unteransicht des Befestigungselements gemäß Fig. 1,
- Fig. 4: eine geschnittene Ansicht entlang der Linie IV - IV in Fig. 3 vor der Montage,
- Fig. 5: eine Schnittansicht entlang der Linie V - V in Fig. 3 im montierten Zustand,
- Fig. 6: das Befestigungselement gemäß Fig. 1 in einen Haltegriff integriert,
- Fig. 7: eine auseinandergezogene, perspektivische Darstellung einer weiteren Ausführungsform des Befestigungselements,
- Fig. 8: eine Schnittdarstellung des Befestigungselements gemäß Fig. 7 im montierten Zustand,
- Fig. 9: eine perspektivische Darstellung einer weiteren Ausführungsform eines Befestigungselements,
- Fig. 10: eine Schnittdarstellung des Befestigungselements gemäß Fig. 9 und
- Fig. 11: das Befestigungselement gemäß Fig. 9 in einen Haltegriff integriert.

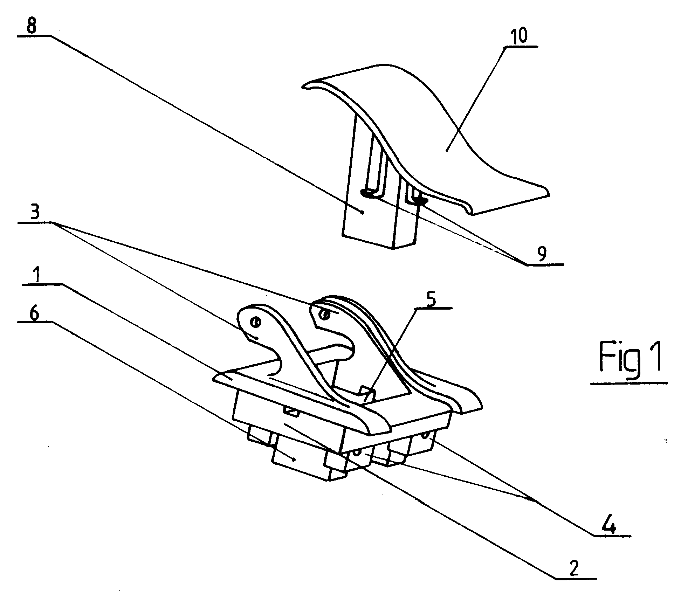

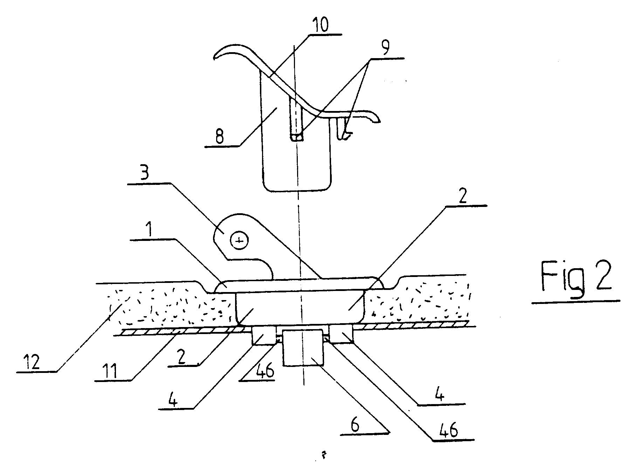

Das Befestigungselement gemäß Fig. 1 bis 6 besteht aus einem Flanschteil 1 mit einer Grundplatte 2, Lagerstützen 3 und Trägern 4. Mit den Lagerstützen 3 läßt sich z. B. ein Klapphaltegriff verbinden. Zwischen den Lagerstützen 3 weisen der Flanschteil 1 und die Grundplatte 2 eine Öffnung 5 auf.

An den Trägern 4 an der Unterseite der Grundplatte 2 ist ein Paar Winkelhebel 6 mittels Lagerzapfen 46 gelagert.

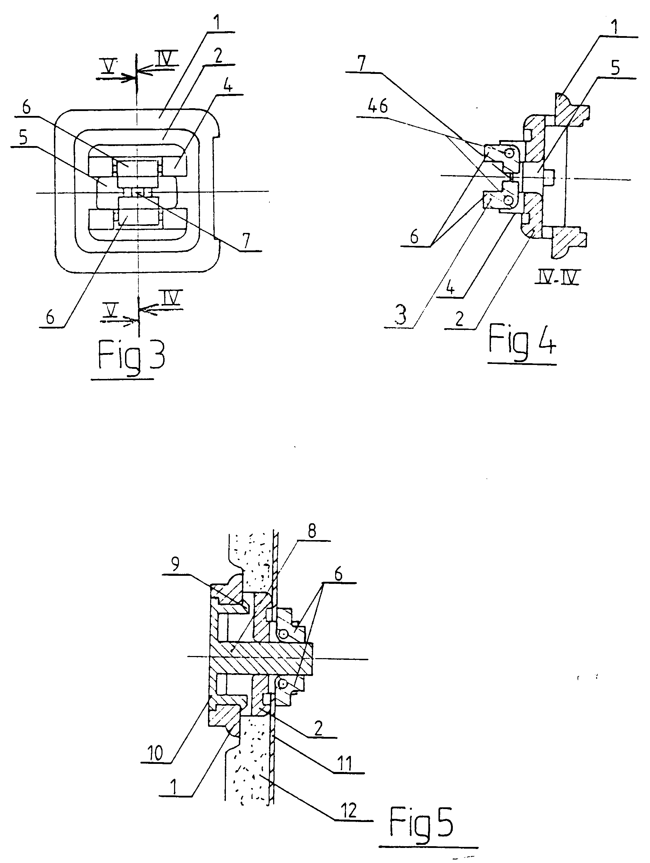

Die Schenkel der Winkelhebel 6 sind unter einem Winkel von 90° zueinander angeordnet und in der in Fig. 4 dargestellten Stellung durch ein Filmscharnier 7 miteinander verbunden.

Ein Verriegelungselement in Form eines Zapfens 8 mit einem daran angeformten Deckel 10 und mit Rastnasen 9 läßt sich in die Öffnung 5 einführen, nachdem das Befestigungselement mit seiner Grundplatte 2 in eine Öffnung eines Karosserieblechs 11 und einer darüberliegenden, weichen Karosserieverkleidung 12 bis zur Anlage des Flanschteils 1 an der Karosserieverkleidung 12 eingeführt wurde.

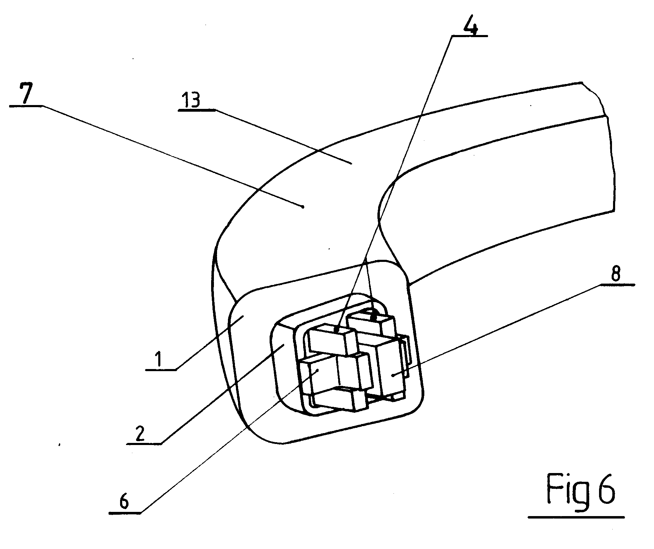

Durch den Zapfen 8 wird das Filmscharnier, das die Winkelhebel 6 verbindet, getrennt, so daß die Winkelhebel 6 in die in Fig. 5 dargestellte Stellung gelangen und dabei das Karosserieblech 11 hintergreifen. Der Zapfen 8 wird mittels der Rastnasen 9, die die Öffnung 5 hintergreifen, festgehalten, wobei der Deckel 10 die Öffnung 5 in optisch ansprechender Weise verschließt.

Um das Befestigungselement vom Karosserieblech 11 zu lösen, genügt es, den Zapfen 8 aus der Öffnung 5 herauszuziehen. Die Rastnasen 9 sind elastisch genug, um dieses Herausziehen zu ermöglichen, ohne daß sich jedoch der Zapfen 8 aufgrund von Erschütterungen lösen kann.

Nach dem Herausziehen des Zapfens 8 können die Winkelhebel 6 in die in Fig. 4 dargestellte Stellung zurückklappen, und das Befestigungselement läßt sich aus der Öffnung im Karosserieblech 11 ohne Schwierigkeiten herausziehen.

In Fig. 6 ist das Befestigungselement gemäß Fig. 1 bis 5 gezeigt, das in einem Haltegriff 13 integriert ist. In diesem Fall handelt es sich nicht um einen Klapphaltegriff, so daß auch keine Lagerstützen 3 vorhanden sind.

Sämtliche Teile des Befestigungselements gemäß Fig. 1 bis 6 lassen sich als Kunststoffspritzgußteile herstellen, und es ist sogar möglich, den Flanschteil mit der Grundplatte 2, den Lagerstützen 3 und den Trägern 4 im Zwei-Komponenten-Spritzguß in derselben Spritzgießform mit den Winkelhebeln 6 herzustellen, wobei die Lagerzapfen 46 mit angespritzt werden und sich in entsprechenden Aufnahmen der Träger 4 drehen können, ohne daß es hierzu einer besonderen Montage bedarf.

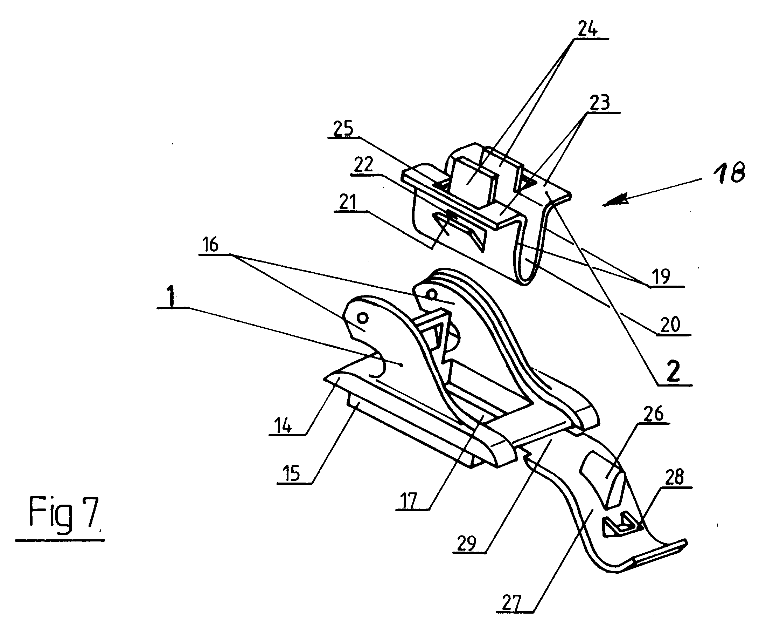

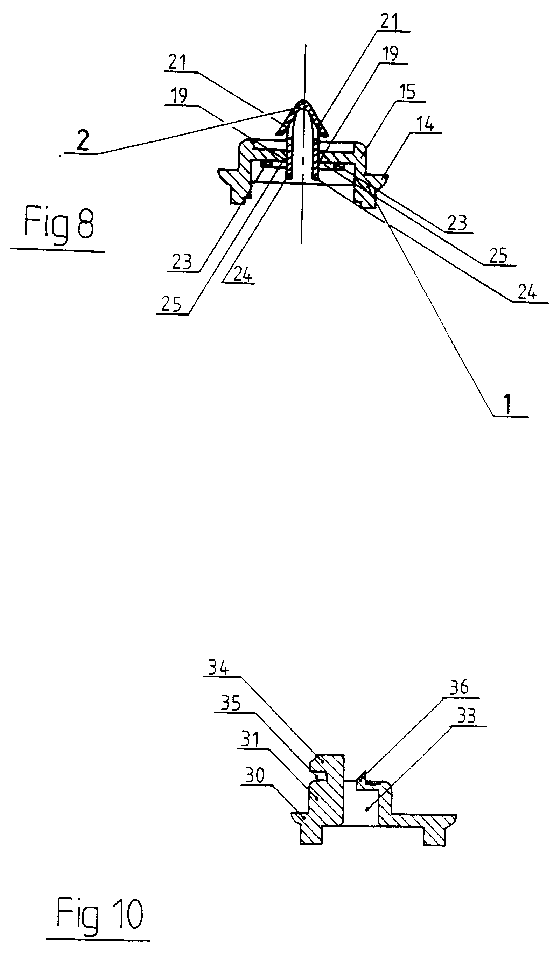

Bei der in Fig. 7 und 8 dargestellten Ausführungsform besteht nur der Flanschteil 14 mit der Grundplatte 15, den Lagerstützen 16 sowie ein damit über ein Filmscharnier 29 verbundener Deckel 27 mit daran angeformten Zapfen 26 aus Kunststoff. An dem Deckel 27 ist noch ein Rastvorsprung 28 angeformt, mit dem sich der Deckel zwischen den Lagerstützen 16 verrasten läßt. Eine aus Stahlblech geformte U-förmige Feder 18 weist parallele Schenkel 19 auf, aus denen Rastvorsprünge 21 ausgestanzt und nach außen gebogen sind. Hierdurch werden in diesem Bereich der Schenkel 19 Ausschnitte 22 gebildet. Des weiteren weist die U-förmige Feder 18 quer abstehende Schenkel 23 auf, aus denen Lappen 24 ausgestanzt sind, die mit den Schenkeln 19 fluchten und einen Ausschnitt 25 in den quer abstehenden Schenkeln 23 freilassen. Um das Befestigungselement an einem Karosserieteil zu befestigen, wird der Flanschteil 14 mit der Grundplatte 15 zur Anlage an ein Karosserieblech und/oder eine Karosserieverkleidung gebracht, so daß eine nichtdargestellte Karosserieöffnung im Bereich der Öffnung 17 im Flanschteil 14 liegt. Die U-förmige Feder 18 wird nunmehr durch die Öffnung 17 im Flanschteil 14 und die Karosserieöffnung hindurchgeführt, bis die Rastvorsprünge 21 die Karosserieöffnung hintergreifen. Danach wird der Deckel 27 über die Öffnung 17 geklappt, wobei der Zapfen 26 in den Zwischenraum 20 zwischen den Schenkeln 19 greift und ein Zusammenbiegen dieser Schenkel verhindert. Der Rastvorsprung 28 am Deckel 27 rastet dabei zwischen den Lagerstützen 16 ein, wodurch das Befestigungselement sicher an dem Karosserieteil gehalten ist.

Soll das Befestigungselement wieder gelöst werden, wird der Deckel 27 aufgeklappt und die U-förmige Feder 18 wird mittels einer Zange an den Lappen 24 ergriffen, die zusammengedrückt werden, so daß die Rastvorsprünge 21 die Karosserieöffnung nicht mehr hintergreifen, sondern sich aus der Karosserieöffnung herausziehen lassen. Danach läßt sich der Flanschteil 14 mit der Grundplatte 15 ohne weiteres von der Karosserie abnehmen.

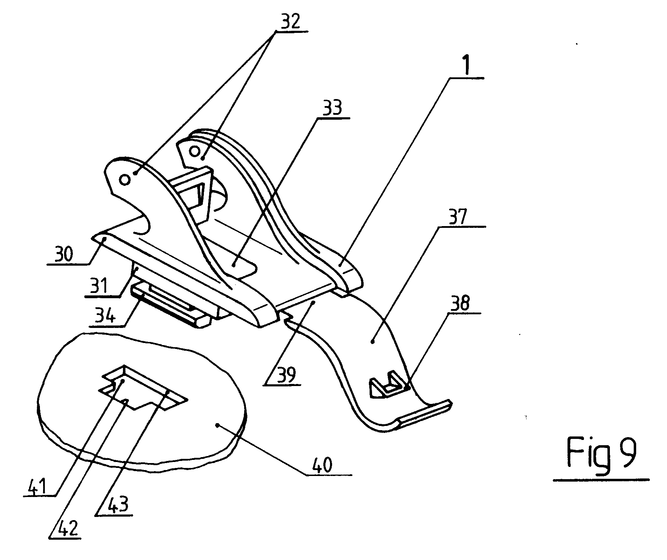

Die Ausführungsform gemäß Fig. 9 bis 11 stimmt hinsichtlich der Gestaltung des Flanschteils 30, der Grundplatte 31 und den Lagerstützen 32 mit den Ausführungsformen gemäß Fig. 1 bis 8 überein. Im Flanschteil 30 ist auch eine Öffnung 33 vorhanden, die sich mittels eines Deckels 37, der mit dem Flanschteil 30 über ein Filmscharnier 39 verbunden ist, verschließen läßt und mittels eines Rastvorsprungs 38 zwischen den Lagerstützen 32 einrastet.

An der Unterseite der Grundplatte 31 ist ein Haken 34 angeformt, der sich in eine Öffnung 41 eines Karosserieblechs 40 einführen und seitlich verschieben läßt, so daß sein Schlitz 35 vom Karosserieblech 40 ausgefüllt ist und der Haken 34 das Karosserieblech 40 untergreift. Dabei liegt der Grund des Schlitzes 35 an einer Seite 42 der Karosserieöffnung 41 an. In der Öffnung 33 ist ein elastischer Rasthaken 36 angeordnet, der beim Einsetzen des Hakens 34 in die Karosserieöffnung 41 zurückweicht und hinter eine Seite 43 der Karosserieöffnung 41 springt, wenn der Grund des Schlitzes 45 an der anderen Seite 42 der Karosserieöffnung 41 zur Anlage gekommen ist. Durch diesen Rasthaken 36 wird eine seitliche Bewegung des Hakens 34 und mit ihm der Grundplatte 31 mit dem Flanschteil 30 verhindert, so daß das Befestigungselement sicher am Karosserieblech 40 gehalten ist. Soll das Befestigungselement gelöst werden, wird der Deckel 37 in die in Fig. 9 dargestellte Stellung zurückgeklappt und ein Werkzeug mit einem Haken wird durch die Öffnung 33 hinter den Rasthaken 36 geführt. Der Rasthaken 36 wird so angehoben, daß er nicht mehr an der Seite 43 der Karosserieöffnung 41 anliegt, wodurch sich der Haken 34 in Richtung der Seite 43 verschieben läßt, bis er sich aus der Karosserieöffnung 41 herausheben läßt.

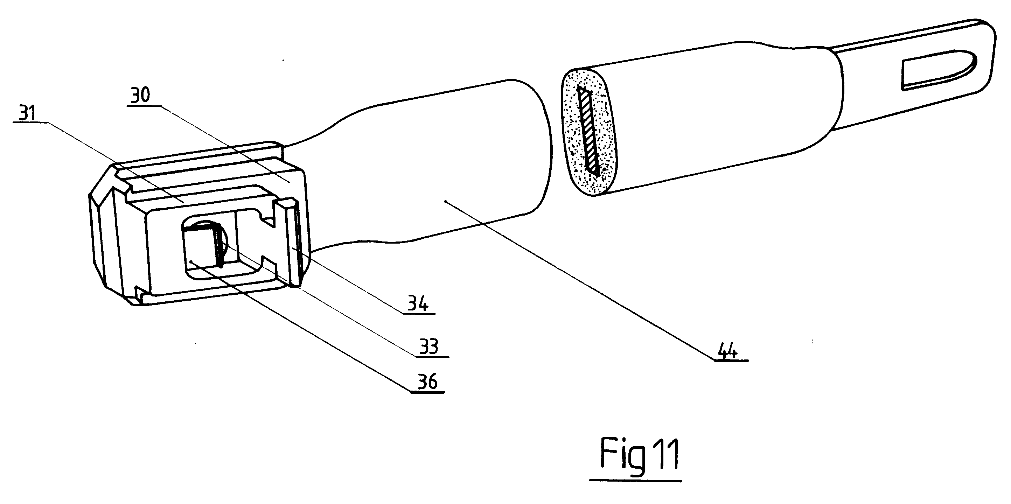

In Fig. 11 ist ein Befestigungselement gemäß Fig. 9 und 10 dargestellt, das in einen Haltegriff 44 integriert ist, wobei der Haken 34 so angeordnet ist, daß er in Zugrichtung des Haltegriffs 44 beansprucht wird, während der Rasthaken 36 von den am Haltegriff 44 angreifenden Kräften frei bleibt.

## Patentansprüche

1. Befestigungselement, insbesondere für an Karosserieteilen von Kraftfahrzeugen zu befestigende Ausstattungsteile wie Armlehnen, Haltegriffe, Sonnenblenden, Rückspiegel mit einem außen an dem Karosserieteil (11, 12; 40) anliegenden Flanschteil (1, 14, 30), einem eine Karosserieöffnung (41) hintergreifenden Halteteil (6, 18, 34) und einem in eine Öffnung (5, 17) des Flanschteils oder in die Karosserieöffnung (41) einführbaren, eine Verschiebung des Halteteils (6, 18, 34) verhindernden Verriegelungselement (8, 26, 36), **dadurch gekennzeichnet,** daß der Halteteil (6) aus wenigstens einem an Trägern (4) des Flanschteils (1) schwenkbar gelagerten Winkelhebel (6) besteht, der sich mittels des Verriegelungselements (8) aus einer das Einführen des Halteteils (6) in die Karosserieöffnung zulassenden Stellung in eine die Karosserieöffnung hintergreifende Stellung schwenken läßt.

2. Befestigungsteil nach Anspruch 1, **dadurch gekennzeichnet,** daß zwei gegenüberliegende Winkelhebel (6) mit unter einem Winkel von 90° angeordneten Schenkeln mittels Lagerzapfen (46) an Trägern (4) des Flanschteils (1) gelagert sind und in der Stellung zum Einführen in die Karosserieöffnung trennbar miteinander verbunden sind.

3. Befestigungsteil nach Anspruch 2, **dadurch gekennzeichnet,** daß die Winkelhebel (6) einstückig aus Kunststoff hergestellt sind und mittels eines Filmscharniers (7) miteinander verbunden sind.

4. Befestigungsteil nach einem der Ansprüche 1 bis 3, **dadurch gekennzeichnet,** daß das Verriegelungselement aus einem durch eine Öffnung (5) in dem Flanschteil (1) hindurch in die Karosserieöffnung zwischen den Winkelhebeln (6) einführbaren Zapfen (8) besteht, den Flanschteil (1) mittels Rastnasen (9) hintergreift und einen Deckel (10) für die Öffnung (5) im Flanschteil (1) bildet.

5. Befestigungsteil nach dem Oberbegriff des Anspruchs 1, **dadurch gekennzeichnet,** daß der Halteteil (18) aus einer durch eine Öffnung (17) in dem Flanschteil (14) hindurch in die Karosserieöffnung einführbaren, mit Rastvorsprüngen (21) die Karosserieöffnung hintergreifenden, sich mit quer abstehenden Schenkeln (23) an der Öffnung (17) in dem Flanschteil abstützenden U-förmigen Feder (18) mit Schenkeln (19) besteht, die Schenkel (19) der U-förmigen Feder (18) über die quer abstehenden Schenkel (23) hinausragende Lappen (24) aufweisen und das Verriegelungselement aus einem zwischen die Schenkel (19) der U-förmigen Feder (18) einklemmbaren Zapfen (26) mit einem die Öffnung (17) im Flanschteil (14) verschließenden Deckel (27) besteht.

6. Befestigungsteil nach Anspruch 5, **gekennzeichnet durch** eine aus Metall hergestellte Feder (18) mit aus den Schenkeln (19) der U-förmigen Feder (18) und den quer abstehenden Schenkeln (23) ausgestanzten und abgebogenen Rastvorsprüngen (21) und Lappen (24).

7. Befestigungsteil nach Anspruch 5 oder 6, **dadurch gekennzeichnet,** daß der Flanschteil (14) mit dem Verriegelungselement (26) einstückig aus Kunststoff hergestellt ist und mit dem Deckel (27) am Verriegelungselement (26) über ein Filmscharnier (29) verbunden ist.

8. Befestigungsteil nach dem Oberbegriff des Anspruchs 1, **dadurch gekennzeichnet,** daß der die Karosserieöffnung (41) hintergreifende Halteteil als mit dem Flanschteil (30) einstückig hergestellter Haken (34) ausgebildet ist und das Verriegelungselement (36) an einer Seite (43) der Karosserieöffnung (41) bei einseitiger Anlage des Hakens (34) an der gegenüberliegenden Seite (42) der Karosserieöffnung (41) anliegt.

9. Befestigungsteil nach Anspruch 8, **dadurch gekennzeichnet,** daß das Verriegelungselement aus einem quer in eine Öffnung (33) im Flanschteil (30) ragenden, elastischen Rasthaken (36) besteht.

10. Befestigungsteil nach Anspruch 9, **dadurch gekennzeichnet,** daß der Flanschteil (30), der Haken (34), der Rasthaken (36) und ein die Öffnung (33) im Flanschteil (30) verschließender Deckel (37) einstückig aus Kunststoff hergestellt sind und der Deckel (37) mit dem Flanschteil (30) über ein Filmscharnier (39) verbunden ist.

## Claims

1. Fastening device, in particular for outfit pieces such as armrests, support grips, sun visors, rearview mirrors to be fitted to body parts of automotive vehicles, with a flange part (1, 14, 30) externally bearing on the body part (11, 12; 40), with a holding part (6, 18, 34) engaging at the rear a body opening (41) and with a locking element (8, 26, 36), which can be introduced into an opening (5, 17) of the flange part or into a body opening (41) and which prevents a displacement of the holding part (6, 18, 34), characterized in that the holding part (6) comprises at least one angled lever (6), which is supported rotationally on supports (4) of the flange part (1) and can be rotated by means of a locking element (8) from one position, which allows the insertion of the holding part (6) into the body opening, to a position, which engages at the rear the body opening.

2. Fastening element according to claim 1, characterised in that the two angled levers (6) lying opposite each other are supported with legs set at a 90° angle and by means of bearing pins (46) on supports (4) of the flange part (1) and are connected to each other in a separable manner in the position for insertion into the body opening.

3. Fastening element according to claim 2, characterised in that the angled levers (6) are manufactured in a single piece in plastic material and are connected to each other by means of a film hinge (7).

4. Fastening element according to one of the claims from 1 to 3, characterised in that the locking element comprises a pin (8), which can be inserted, through an opening (5) in the flange part (1), into the body opening between the angled levers (6), engages at the rear the flange part (1) by means of detent protrusions (9) and forms a lid (10) for the opening (5) in the flange part (1).

5. Fastening element according to the preamble of claim 1, characterised in that the holding part (18) comprises a U-shaped spring (18) having legs (19), spring which can be inserted, through an opening (17) in the flange part (14) into the body opening, engages at the rear the body opening with detent projections (21) and is supported with legs (23) protruding transversely on the opening (17) in the flange part, in that the legs (19) of the U-shaped spring (18) present tongues (24) protruding beyond the legs (23) protruding transversely and in that the locking element comprises a pin (26) which can be locked between the legs (19) of the U-shaped spring (18) and which has a lid closing the opening (17) in the flange part (14).

6. Fastening element according to claim 5, characterised by a spring (18) made of metal with detent projections (21) and with tongues (24) sheared and bent outwards respectively from the legs (19) of the U-shaped spring (18) and from the legs (23) protruding transversely.

7. Fastening element according to claim 5 or 6, characterised in that the flange part (14) is manufactured in a single piece of plastic material with the locking element (26) and is connected to the lid (27) on the locking element (26) by means of a film hinge (29).

8. Fastening element according to the preamble of claim 1, characterised in that the holding element engaging at the rear the body opening (41) is shaped as a hook (34) manufactured in a single piece with the flange part (30) and in that the locking element (36) bears on a side (43) of the body opening (41) in the presence of unilateral bearing of the hook (34) on the side (42) lying opposite to the body opening (41).

9. Fastening element according to claim 8, characterised in that the locking element comprises an elastic detent hook (36), protruding transversely in an opening (33) in the flange part (30).

10. Fastening element according to claim 9, characterised in that the flange part (30), the hook (34), the detent hook (36) and a lid (37) closing the opening (33) in the flange part (30) are manufactured in a single piece of plastic material and the lid (37) is connected to the flange part (30) by means of a film hinge (39).

## Revendications

1. Elément de fixation, en particulier pour des pièces d'équipement telles que accoudoir, poignées de prise, pare-soleils, rétroviseurs à fixer à des éléments de carrosserie d'automobiles, avec une partie de flange (1, 14, 30) reposant extérieurement à l'élément de carrosserie (11, 12; 40), avec une partie de retenue (6, 18, 34) engageant postérieurement une ouverture de carrosserie (41) et avec un élément de blocage (8, 26, 36), introduisible dans une ouverture (5, 17) de la partie de flange ou bien dans une ouverture de carrosserie (41) et empêchant un déplacement de la partie de retenue (6, 18, 34), caractérisé par le fait que la partie de retenue (6) consiste en au moins un levier angulé (6), lequel est supporté de manière rotative par les supports (4) de la partie de flange (1) et peut être mis en rotation au moyen d'un élément de blocage (8) d'une position permettant l'insertion de la partie de retenue (6) dans l'ouverture de carrosserie à une position engageant postérieurement l'ouverture de carrosserie.

2. Partie de fixation selon la revendication 1, caractérisée par le fait que deux leviers angulés (6) placés l'un en face de l'autre sont supportés par des flancs disposés avec un angle de 90° et au moyen de chevilles de support (46) sur des supports (4) de la partie de flange (1), et sont reliés l'un avec l'autre de manière séparable dans la position pour l'insertion dans l'ouverture de carrosserie.

3. Partie de fixation selon la revendication 2, caractérisée par le fait que les leviers angulés (6) sont réalisés en un seul morceau en matériau synthétique et sont reliés l'un avec l'autre au moyen d'un charnière à film (7).

4. Partie de fixation selon l'une des revendications 1 à 3 , caractérisée par le fait que l'élément de blocage consiste en une cheville (8), laquelle est insérable, au travers d'une ouverture (5) dans la partie de flange (1), dans l'ouverture de carrosserie entre les leviers angulés (6), engage postérieurement la partie de flange (1) au moyen de saillies d'arrêt (9) et forme un couvercle (10) pour l'ouverture (5) dans la partie de flange (1).

5. Partie de fixation selon le préambule de la revendication 1, caractérisée par le fait que la partie de retenue (18) consiste en un ressort (18) en forme de U ayant des flancs (19), laquelle est insérable, au travers d'une ouverture (17), dans la partie de flange (14) dans l'ouverture de carrosserie, engage postérieurement l'ouverture de carrosserie avec des saillies d'arrêt (21) et est supportée avec des flancs (23) saillants transversalement sur l'ouverture (17) dans la partie de flange, que les flancs (19) du ressort (18) en forme de U présentent des languettes (24) saillantes au delà des flancs (23) saillants transversalement, et que l'élément de blocage consiste en une cheville (26) pouvant être bloquée entre les flancs (19) du ressort (18) en forme de U et ayant un couvercle fermant l'ouverture (17) dans la partie de flange (14).

6. Partie de fixation selon la revendication 5, caractérisée par un ressort (18) réalisé en métal avec des saillies d'arrêt (21) et avec des languettes (24) tranchées et pliées au dehors respectivement aux flancs (19) du ressort (18) en forme de U et aux flancs (23) saillants transversalement.

7. Partie de fixation selon la revendication 5 ou 6, caractérisée par le fait que la partie de flange (14) est réalisée en un seul morceau en matériau synthétique avec l'élément de blocage (26) et est reliée avec le couvercle (27) sur l'élément de blocage (26) par l'intermédiaire d'une charnière à film (29).

8. Partie de fixation selon le préambule de la revendication 1, caractérisée par le fait que la partie de retenue engageant postérieurement l'ouverture de carrosserie (41) est conformée comme un crochet (34) réalisé en un seul morceau avec la partie de flange (30) et que l'élément de blocage (36) repose sur un côté (43) de l'ouverture de carrosserie (41) en présence du repos unilatéral du crochet (34) sur le côté (42) lui faisant face de l'ouverture de carrosserie (41).

9. Partie de fixation selon la revendication 8, caractérisée par le fait que l'élément de blocage consiste en un crochet d'arrêt (36) élastique, saillant transversalement dans une ouverture (33) dans la partie de flange (30).

10. Partie de fixation selon la revendication 9, caractérisée par le fait que la partie de flange (30), le crochet (34), le crochet d'arrêt (36) et un couvercle (37) fermant l'ouverture (33) dans la partie de flange (30) sont réalisés en un seul morceau en matérieu synthétique et que le couvercle (37) est relié avec la partie de flange (30) par l'intermédiaire d'une charnière à film (39).
